# DEMANDE DE BREVET EUROPEEN

(11) **EP 4 672 193 A1**
(43) Date de publication de la demande: **31.12.2025**
(21) Numéro de dépôt: 25184949.3
(22) Date de dépôt: 24.06.2025
(51) Int. Cl.: G08G 1/01, B60W 50/14, G08G 1/0967, B60W 40/04, H04W 4/44, H04W 4/46

(54) **PROCÉDÉ ET SYSTÈME DE FILTRAGE DE DONNÉES PAR UN VÉHICULE EGO EN SITUATION D ÉVÈNEMENT DANGEREUX DU TYPE EMBOUTEILLAGE**

(30) Priorité: 24.06.2024 FR 2406784
(71) Demandeur: Ampere SAS, 92100 Boulogne-Billancourt (FR)
(72) Inventeur: LETELLIER, Nicolas, 78084 GUYANCOURT (FR)
(74) Mandataire: Renault Group

(57) **Abrégé**

Procédé et système de filtrage de données par un véhicule en situation d'évènement dangereux du type embouteillage comprenant la détection d'un évènement dangereux, la préparation d'une communication relative audit évènement destiné à au moins une cible, la vérification de la validité de l'évènement dangereux détecté et la transmission de la communication préparée à l'au moins une cible lorsqu'il est détecté que l'évènement dangereux est valide ou l'annulation de la transmission lorsque l'évènement dangereux est invalide.

## Description

L'invention concerne un procédé de filtrage de données par un véhicule en situation d'évènement dangereux approchant. L'invention porte également sur un système de filtrage apte à mettre en œuvre un tel procédé. L'invention porte encore sur un véhicule équipé d'un tel système.

Dans le milieu automobile, les technologies visant à assurer la sécurité des automobilistes basées sur la communication d'un véhicule ego avec son environnement, notamment avec un serveur distant, des véhicules voisins ou des éléments de l'infrastructure routière, sont de plus en plus utilisées. Classiquement, le véhicule est équipé d'un système d'aide à la conduite, ou système avancé d'aide à la conduite, de l'anglais Advanced Driver Assistance Systems (ADAS). Un tel système est apte à détecter un évènement dangereux approchant, à alerter le conducteur, à manœuvrer le véhicule selon le besoin en réponse à un tel évènement et, optionnellement, à informer des véhicules voisins de la situation relative audit évènement directement ou indirectement, par l'intermédiaire d'un serveur distant notamment. Par exemples, de manière non limitative, les évènements concernés peuvent être relatifs à des embouteillages, freinages à risque, véhicules d'urgence, routes glissantes ou routes enneigées.

Dans le cas de la technologie de la communication de véhicule à véhicule, ou V2V en abrégé, de véhicule à un serveur distant, ou V2C, ou encore de véhicule à des éléments de l'infrastructure routière connectés, ou V2I, le véhicule ego est connecté à l'aide de terminaux intelligents embarqués de sorte à former un réseau de communication sans fil apte à mettre en œuvre une communication mutuelle. Le véhicule ego peut ainsi envoyer ou recevoir des données relatives à des évènements dangereux présents dans l'infrastructure routière de sorte à améliorer l'efficacité du trafic routier et à assurer la sécurité des utilisateurs.

Les conditions de déclenchement des protocoles de communication entre le véhicules et différentes cibles ou sources du réseau de communication peuvent être encadrées par des règles et normes spécifiques, par exemple définies par le C2C Communication Consortium. Elles incluent notamment la détection d'un freinage, ou d'une décélération, à l'approche d'un évènement dangereux du type embouteillage.

Dans le cadre du nouveau protocole EuroNcap, il a été constaté que l'exécution de conditions déclenchantes peut être à l'origine de fausses détection d'évènements concernant des embouteillages, particulièrement une queue d'embouteillage, lorsque le véhicule se trouve à proximité d'autres évènements susceptibles de ralentir le trafic, tels que des giratoires, feux tricolores, panneaux de stop ou encore de cédez-le-passage. En effet, les différents capteurs équipés dans le véhicule ne sont pas aptes à détecter des véhicules situés les uns derrière les autres de sorte à les dénombres de manière fiable. Ils ne permettent donc pas de distinguer des véhicules situés les uns derrière les autres du fait d'un ralentissement du trafic ou d'un arrêt temporaire dû à un élément d'infrastructure routière de véhicules situés dans un embouteillage. Il en résulte la génération de communications alertant d'autres usagers de l'infrastructure routière d'embouteillages non présents, c'est-à-dire de faux positifs.

La présente invention s'inscrit dans ce contexte et vise à proposer un procédé de filtrage permettant d'optimiser la détection d'évènements du type embouteillages de sorte à assurer la sécurité des utilisateurs dans l'infrastructure routière.

L'invention concerne un procédé de filtrage de données par un véhicule ego en situation d'évènement dangereux du type embouteillage approchant, le procédé comprenant :
- la détection d'un évènement dangereux susceptible d'être un embouteillage, notamment une queue d'embouteillage, et l'acquisition de données relatives audit évènement comprenant au moins sa position ;
- la préparation par une unité de traitement d'une communication, comprenant les données acquises, vers au moins une cible sélectionnée parmi un serveur distant, un véhicule secondaire connecté, distinct du véhicule ego, et/ou un élément d'infrastructure connecté ;
- la vérification de la validité de l'évènement dangereux détecté afin de contrôler que ledit évènement dangereux est du type embouteillage ou non par l'intermédiaire d'un module de localisation du véhicule ego dans l'infrastructure routière comprenant un moyen de localisation et/ou un moyen de capture d'images ; et
- la transmission, par un module de communication, de la communication préparée à l'au moins une cible lorsqu'il est détecté que l'évènement dangereux détecté est valide et est un embouteillage ou l'annulation d'une telle transmission lorsque l'évènement dangereux est invalide et n'est pas un embouteillage.

Notamment, la vérification de la validité de l'évènement dangereux détecté comprend la comparaison d'une position du véhicule ego avec une position d'au moins un élément de l'infrastructure routière, l'évènement dangereux étant invalide lorsqu'une distance séparant la position de l'évènement dangereux de la position de l'au moins un élément d'infrastructure routière est inférieure ou égale à un seuil prédéfini.

Selon un exemple d'exécution alternatif ou additionnel, la vérification de la validité de l'évènement dangereux détecté comprend la détermination d'une distance séparant le véhicule ego de l'évènement dangereux, la détermination d'une distance séparant le véhicule égo d'au moins un élément d'infrastructure, la détermination d'un écart entre lesdites distances, et la comparaison de l'écart calculé avec un seuil d'écart prédéfini, l'évènement dangereux étant invalide lorsque l'écart calculé est inférieur ou égal au seuil d'écart prédéfini.

Optionnellement encore, la vérification de la validité de l'évènement dangereux détecté comprend la comparaison de la position de l'évènement dangereux détectée avec une position d'au moins un élément de l'infrastructure routière, l'évènement dangereux étant invalide lorsqu'une distance séparant la position de l'évènement dangereux de l'au moins un élément de l'infrastructure routière est inférieure ou égale à un seuil prédéfini.

Ces différentes options ont en commun la prise en compte de la position d'un élément d'infrastructure routière (tel qu'un feu tricolore ou un panneau stop) pour vérifier la validité de l'évènement dangereux détecté. Cela permet de distinguer un ralentissement anormal d'un ralentissement lié simplement au respect du code de la route.

Notamment, la vérification de la validité de l'évènement dangereux est exécutée en fonction d'une préférence du conducteur.

De manière optionnelle, la vérification de la validité de l'évènement dangereux est exécutée seulement lorsque le véhicule ego circule à une vitesse longitudinale supérieure ou égale à une vitesse minimale seuil préalablement ou simultanément à la détection de l'évènement dangereux.

Notamment:
- la détection de l'évènement dangereux comprend la réception, par un serveur distant, un véhicule secondaire connecté et/ou un élément d'infrastructure, de données relatives à l'évènement dangereux ; et/ou
- la vérification de la validité de l'évènement dangereux comprend la réception d'information relatives à une position d'un élément d'infrastructure connecté.

Optionnellement, le procédé de filtrage comprend, en outre, l'émission d'un message d'alerte sonore, visuel et/ou haptique à l'attention d'un conducteur du véhicule ego communiqué par l'intermédiaire d'un module d'alerte informant ledit conducteur de la validité de l'évènement dangereux.

L'invention porte également sur un système de filtrage de données pour un véhicule, le système comprenant des éléments matériels et/ou logiciels mettant en œuvre le procédé selon l'invention, les éléments matériels comportant au moins une unité de traitement de données, un module de localisation du véhicule dans l'infrastructure routière et un module de communication.

L'invention s'étend encore à un véhicule automobile équipé d'un système de filtrage selon l'invention.

L'invention peut également s'étendre à un produit programme d'ordinateur comprenant des instructions de code de programme enregistrées sur un support lisible par ordinateur pour mettre en œuvre les étapes du procédé selon l'invention lorsque ledit programme fonctionne sur un ordinateur. Autrement dit l'invention peut s'étendre à un produit programme d'ordinateur téléchargeable depuis un réseau de communication et/ou enregistré sur un support de données lisible par un ordinateur et/ou exécutable par un ordinateur comprenant des instructions qui, lorsque le programme est exécuté par l'ordinateur, conduisent celui-ci à mettre en œuvre le procédé selon l'invention.

La présente invention porte encore sur un support d'enregistrement de données, lisible par un ordinateur, sur lequel est enregistré un programme d'ordinateur comprenant des instructions de code de programme de mise en œuvre du procédé de configuration selon l'invention, ou encore un support d'enregistrement lisible par ordinateur comprenant des instructions qui, lorsqu'elles sont exécutées par un ordinateur, conduisent celui-ci à mettre en œuvre le procédé tel qu'exposé ci-dessus.

Enfin, l'invention peut s'étendre à un signal d'un support de données, portant le produit programme d'ordinateur selon l'invention.

D'autres détails, caractéristiques et avantages ressortiront plus clairement à la lecture de la description détaillée donnée ci-après, à titre indicatif et non limitatif, en relation avec les différents exemples de réalisation illustrés sur les figures suivantes :
[Fig. 1] La figure 1 est une vue schématique d'un mode de réalisation d'un véhicule équipé d'un système de filtrage de données selon l'invention.
[Fig. 2] La figure 2 est un ordinogramme général d'un exemple d'exécution d'un procédé de filtrage de données selon l'invention.
[Fig. 3] La figure 3 est une représentation schématique du déplacement d'un véhicule ego dans l'infrastructure routière lors d'une détection d'évènement dangereux du type embouteillage valide.
[Fig. 4] La figure 4 est une représentation schématique du déplacement d'un véhicule ego dans l'infrastructure routière lors d'une détection d'évènement dangereux du type embouteillage invalide.

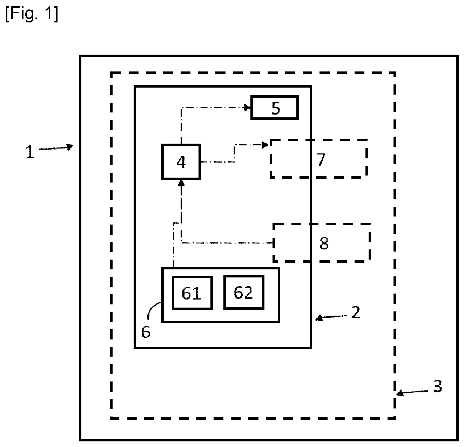

La figure 1 illustre schématiquement un mode de réalisation d'un véhicule 1 équipé d'un système de filtrage 2 de données en situation d'évènement dangereux du type embouteillage. On entend par « évènement dangereux » un évènement susceptible de présenter des risques pour le conducteur au sein de l'infrastructure routière, particulièrement un évènement à venir ou approchant du véhicule 1.

Optionnellement, le véhicule 1 comprend également un système d'aide à la conduite 3. Le système de filtrage 2 selon l'invention est alors compris dans ledit système d'aide à la conduite 3 ou configuré pour échanger des données avec ledit système d'aide à la conduite 3.

Dans l'ensemble de la description ci-après, on distinguera un véhicule ego 1, apte à mettre en œuvre un procédé de filtrage 100 selon l'invention, d'un véhicule secondaire 10 présent dans l'infrastructure routière, connecté et apte à recevoir et/ou émettre des données. Les termes « ego » et « secondaire » ont ici vocation à distinguer des véhicules présents dans l'infrastructure routière.

Le système de filtrage 2 comprend des éléments matériels et/ou logiciels aptes à mettre en œuvre le procédé selon l'invention. Les éléments matériels comportent au moins une unité de traitement 4 de données, un module de communication 5 et un module de localisation 6 du véhicule ego 1 dans l'infrastructure routière.

Optionnellement, le système de filtrage 2 comprend, en outre, tout ou partie des éléments matériels et/ou logiciels suivant :
- un module d'alerte 7 du conducteur ; et/ou
- un module de mesure 8.

L'unité de traitement 4 comprend un ou plusieurs élément(s) de mémoire et un calculateur comportant des ressources matérielles et logicielles, notamment au moins un processeur ou microprocesseur coopérant avec le ou les élément(s) de mémoire. Le calculateur est apte à exécuter des instructions pour la mise en œuvre d'un programme d'ordinateur et à recevoir des données issues de divers équipements équipant le véhicule ego 1.

Le module de communication 5 est configuré de sorte à pouvoir émettre un flux de données vers au moins une cible et recevoir un flux de données issus d'au moins une source définie au moyen d'une liaison sans fil, basse fréquence ou haute fréquence. Il peut, par exemple, s'agir d'une liaison sans fil basée sur des technologies « cellulaire» ou « Wifi ». Les sources et cibles sont notamment sélectionnées parmi un appareil connecté, un serveur distant, un véhicule secondaire 10 connecté et/ou un élément d'infrastructure connecté. On entend ici par « élément d'infrastructure » un élément connecté présent dans l'infrastructure routière, notamment des feux tricolores connectés ou des panneaux d'affichage d'informations connectés.

Notamment, lesdites données peuvent être envoyées à destination d'un moyen de communication distant, équipé au niveau d'un élément d'infrastructure, d'au moins un véhicule secondaire 10 et/ou au niveau d'un serveur distant apte à diffuser lesdites données à une pluralité de véhicules secondaires 10 et/ou éléments d'infrastructure. Un même principe s'applique à la réception de données. Ainsi, lorsqu'un évènement dangereux EDx est détecté par le véhicule ego 1, il peut avantageusement être communiqué à un ou plusieurs véhicule(s) secondaire(s) 10 présents dans l'infrastructure routière. Notamment le véhicule secondaire 10 ou les véhicules secondaires 10 considéré(s) présente(nt) une proximité avec le véhicule ego 1 et ledit évènement. Par exemple, les véhicules secondaires 10 ciblés sont situés à une distance dépendante de la vitesse de circulation moyenne sur l'infrastructure routière, de manière à permettre aux véhicules secondaires ciblé d'adapter leur comportement, cette distance dépend donc de la vitesse moyenne sur l'infrastructure, la vitesse du véhicule primaire, et une valeur de décélération maximale des véhicules secondaires afin de leur permettre de réduire leur vitesse en amont de l'évènement dangereux.

Le module de localisation 6 permet la localisation du véhicule 1 dans l'infrastructure routière. Il intègre, par exemple, un moyen de localisation 61 comprenant un système de localisation approximative du véhicule 1 et/ou une cartographie haute définition de l'infrastructure routière. Notamment, la localisation approximative du véhicule 1 peut être fournie par un système de type GPS, de l'acronyme anglais « Global Positioning system ». Alternativement ou en complément, le moyen de localisation 61 6 peut être un système de localisation embarqué dans le véhicule ego 1 qui intègre les mouvements dudit véhicule en permanence.

Additionnellement ou alternativement, le module de localisation 6 comprend un moyen de capture d'images 62 est apte à détecter des informations présentes dans l'environnement extérieur afin de localiser le véhicule ego 1 dans l'infrastructure routière, notamment des panneaux d'affichages d'informations relatives à des éléments d'infrastructure approchant susceptibles de générer un ralentissement de la circulation, tels qu'un giratoire, une barrière de péage ou autre mentionnés plus haut. Par exemple, le moyen de capture d'images 62 comprend un radar, un lidar, une caméra et/ou tout autre type de capteur adapté à détecter des cibles dans l'environnement du véhicule ego 1.

Le module d'alerte 7 est apte à diffuser un message et/ou un signal à l'attention du conducteur sous la forme d'émission :
- sonore, par exemple au moyen d'un haut-parleur, et/ou
- visuelle, par exemple au moyen d'un module d'affichage de type écran, et/ou
- haptique, par exemple au moyen d'un élément apte à émettre des vibrations compris dans le siège conducteur ou le volant.

Alternativement ou en combinaison, une telle alerte peut être diffusée par l'intermédiaire d'une interface Homme-machine.

Le module de mesure 8 comprend au moins un capteur configuré pour mesurer des données internes au véhicule ego 1. Par exemple, le module de mesure 8 est configuré pour mesurer une vitesse longitudinale du véhicule ego 1, une décélération, l'intensité d'un freinage ou autre.

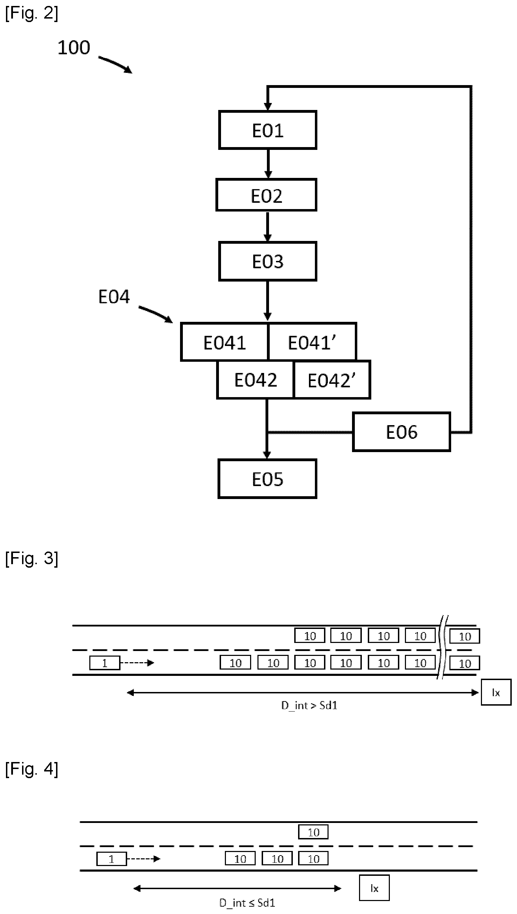

Un exemple d'exécution du procédé de filtrage 100 de données par le véhicule ego 1 en situation d'évènement dangereux approchant, notamment identifié comme étant du type embouteillage, est décrit ci-après en référence aux figures 2 à 4. Le procédé de filtrage 100 peut également être considéré comme étant un procédé de fonctionnement du système de filtrage 2 selon l'invention ou comme un procédé de fonctionnement d'un véhicule 1 équipé dudit système.

De manière générale, le procédé de filtrage 100 selon l'invention comprend, dans un premier temps, la détection E01 d'un évènement dangereux EDx, susceptible d'être un embouteillage, déclencheur d'une communication vers au moins une cible connectée. On entend ici par « embouteillage » au moins une file d'une pluralité de véhicules secondaires 10 disposés les uns derrière les autres à l'arrêt, ou évoluant à une vitesse largement inférieure à une vitesse maximale autorisée à un instant donné, notamment une vitesse strictement inférieure à 20 km/h, au sein de l'infrastructure routière. Par exemple, lesdits véhicules secondaires 10 sont répartis sur plusieurs files circulant chacune sur une voie. Notamment, le procédé comprend la détection d'une queue d'embouteillage, correspondant à une file particulière, notamment celle comprenant le plus de véhicules secondaires 10 de sorte que les derniers véhicules secondaires 10 arrivant dans l'embouteillage sont les plus proches du véhicule ego 1 approchant de l'évènement dangereux EDx.

La détection E01 d'un évènement dangereux EDx du type embouteillage est notamment initiée par l'accomplissement d'au moins une condition déclenchante prédéfinie.

De manière connue, non détaillée, la détection d'un embouteillage, notamment de la queue d'embouteillage, est réalisée par l'intermédiaire d'au moins l'un parmi:
- la détection d'un freinage du véhicule ego 1 par l'intermédiaire du module de mesure 8, notamment la détection d'une décélération supérieure ou égale à un seuil de décélération Sdx prédéfini et/ou la détection d'un enfoncement d'une pédale de frein supérieur à un seuil d'enfoncement Spx prédéfini ;
- la détection, par l'intermédiaire du module de localisation 6, en particulier du moyen de capture d'images 62, d'au moins un véhicule secondaire 10, situé sur une portion de la chaussée à venir relativement au véhicule ego 1, à l'arrêt, ayant activé des feux de détresse et/ou effectuant un freinage ;
- la réception, par le véhicule ego 1, d'une communication alertant d'un évènement dangereux approchant du type embouteillage ladite communication étant émise par une source sélectionnée parmi un serveur distant, un véhicule secondaire 10 connecté et/ou un élément d'infrastructure connecté.

Par exemple, de manière connue et non limitative, le CAR 2 CAR Communication Consortium (C2C-CC) définit des conditions déclenchantes, ou « triggering event » en anglais, de la détection d'un évènement dangereux du type embouteillage EDx initiant la préparation, par le véhicule ego 1, d'une communication véhicule-serveur, véhiculeinfrastructure et/ou inter-véhicules afin de transmettre des données relatives à l'évènement dangereux EDx détecté au niveau de l'unité de traitement 4, tel que davantage exposé ci-après.

Notamment, le système de filtrage 2 ou le véhicule ego 1 est configuré pour détecter un évènement distant EDx du type embouteillage initiant la préparation d'une communication du véhicule ego 1 avec des cibles distantes lorsque la condition déclenchante TRCO_0 définie dans le C2C-CC est exécutée. La condition déclenchante TRCO_0 définit la détection d'un embouteillage lorsque, dans une situation initiale, le véhicule ego 1 circule à une vitesse longitudinale initiale supérieure à 80 km/h et effectue une décélération initiale égale ou inférieure à 0,1 m/s² puis, en réaction à un évènement dangereux du type embouteillage EDx, notamment à une queue d'embouteillage :
- le conducteur du véhicule ego 1 réduit la vitesse longitudinale du véhicule ego 1 afin d'atteindre une vitesse longitudinale cible inférieure ou égale à 30 km/h ; et
- une durée écoulée entre la mise en œuvre de la vitesse longitudinale initiale et la mise en œuvre de la vitesse longitudinale cible est inférieure ou égale à 10s ;
- une décélération mesurée entre la vitesse longitudinale initiale et la vitesse longitudinale cible est supérieure à 3,5 m/s², autrement dit une accélération négative inférieure à -3,5 m/s².

Selon un autre exemple, le système de filtrage 2 ou le véhicule 1 est configuré pour détecter un embouteillage nécessitant une communication du véhicule ego 1 avec des cibles distantes lorsque la condition déclenchante TRCO_6 définie dans le C2C-CC est exécutée, correspondant à la détection, ou reconnaissance, par l'intermédiaire du module de mesure 8 ou du moyen de capture d'images 62, d'une situation dans laquelle le véhicule ego 1 fait face à une queue d'embouteillage tel que décrit plus haut.

Lorsqu'un embouteillage est ainsi détecté, le procédé comprend l'acquisition E02 de données relatives audit évènement dangereux EDx en prévision de la communication desdites données. Indépendamment du principe de détection mis en œuvre, lesdites données comprennent au moins la position de l'évènement dangereux susceptible d'être un embouteillage, notamment de la queue de l'embouteillage, au sein de l'infrastructure routière. De telles données sont fournies par le module de mesure 8, le module de localisation 6, le moyen de capture d'images 62 et/ou l'une des sources connectées informant le véhicule ego 1 de la présence de l'évènement dangereux EDx. Par exemple, le moyen de capture d'images 62 est apte à déterminer une distance séparant le véhicule 1 de l'évènement dangereux, et par voie de conséquence la position dudit évènement, par détection de marquage de la chaussée ou estimation d'une distance visible devant le véhicule ego 1.

La détection E01 d'un évènement dangereux du type embouteillage EDx est ensuite suivie de la préparation E03, par l'unité de traitement 4, d'une communication comprenant les données acquises. Ladite communication est destinée à au moins une cible sélectionnée parmi un serveur distant, un véhicule secondaire 10 connecté et/ou un élément d'infrastructure connecté.

Afin de prévenir la transmission de données erronées vers lesdites cibles, le procédé selon l'invention comprend avantageusement une étape de vérification E04 de la validité de l'évènement dangereux EDx détecté. On entend par « vérification de la validité » la confirmation que ledit évènement dangereux EDx est du type embouteillage ou non. Une telle vérification est réalisée par l'intermédiaire du module de localisation 6, notamment par l'intermédiaire du moyen de localisation 61 du véhicule ego 1 dans l'infrastructure routière et/ou par l'intermédiaire du moyen de capture d'images 62.

Selon un exemple d'exécution préférentiel, l'étape de vérification E04 de la validité de l'évènement dangereux EDx détecté comprend la comparaison de la position du véhicule ego 1 à l'instant t de la détection E01 de l'évènement dangereux et/ou de la position du véhicule ego 1 ultérieurement à une telle détection, alors qu'il approche dudit évènement dangereux EDx, avec une position d'au moins un élément d'infrastructure routière Ix.

La description ci-après est faite en référence à un unique élément d'infrastructure routière Ix mais il est entendu que le procédé selon l'invention s'applique *mutatis mutandis à* une pluralité d'éléments d'infrastructure routière Ix.

Optionnellement, l'élément d'infrastructure routière Ix considéré est situé dans un périmètre prédéfini entourant le véhicule ego 1, par exemple un périmètre de l'ordre de 500m ou encore de 400m. Alternativement, l'éléments d'infrastructure routière Ix considéré est situé devant le véhicule ego 1, par exemple sur un trajet à venir d'un itinéraire préalablement renseigné par le conducteur dans le moyen de localisation 61. Optionnellement, lorsqu'une pluralité d'éléments d'infrastructure routière Ix est détectée à proximité du véhicule ego 1 et/ou de l'évènement dangereux, l'étape de vérification E04 de la validité de l'évènement dangereux EDx est exécutée relativement à l'éléments d'infrastructure routière Ix présentant la plus grande proximité avec le véhicule ego 1 et/ou avec l'évènement dangereux EDx.

Le procédé comprend alors, dans un premier temps, une sous-étape de détermination de la position E041 du véhicule ego 1 d'une part, et de l'au moins un élément d'infrastructure routière Ix d'autre part. La localisation de la position du véhicule ego 1 est notamment définie par l'intermédiaire du module de localisation 6, en temps réel ou à intervalle de temps régulier lorsqu'un évènement dangereux EDx est détecté.

La position de l'au moins un élément d'infrastructure Ix est préférentiellement déterminée par l'intermédiaire du moyen de localisation 61, notamment par les outils de cartographie qu'elle comprend afin d'identifier un ou plusieurs éléments de l'infrastructure routière Ix et leur position. Alternativement ou additionnellement, le moyen de capture d'images 62 est apte à définir la position d'un ou plusieurs éléments d'infrastructure routière Ix, par exemple au moyen d'une reconnaissance de panneau de signalisation, ou « traffic-sign recognition » en anglais, ou par détection de caractéristiques de l'infrastructure routières classiques, telles qu'un passage piéton à proximité d'un élément d'infrastructure routière Ix du type feux de signalisation, giratoire, panneau stop ou cédezle-passage notamment. Selon encore une autre alternative, la position de l'au moins un élément d'infrastructure routière Ix est transmise au véhicule ego 1 par l'intermédiaire du module de communication 5. Par exemple, une telle position est directement transmise par l'élément d'infrastructure routière Ix connecté.

Une fois la position de l'élément d'infrastructure routière Ix et la position du véhicule ego 1 déterminées, l'étape de vérification E04 comprend une étape de comparaison E042, notamment de la position du véhicule ego 1 avec la position de l'au moins un élément d'infrastructure.

L'évènement dangereux EDx détecté est déterminé comme étant invalide, c'est-à-dire que l'évènement dangereux du type embouteillage EDx initialement détecté est un faux positif, erroné, lorsqu'une distance D_int séparant la position du véhicule ego 1 de la position de l'au moins un élément d'infrastructure routière Ix est inférieure ou égale à un premier seuil de distance Sd1 prédéfini. Inversement, l'évènement dangereux EDx détecté est considéré comme valide, c'est-à-dire correctement identifié, lorsque la distance D_int séparant la position du véhicule ego 1 de la position de l'au moins un élément de l'infrastructure routière Ix est strictement supérieure au premier seuil de distance Sd1.

Par exemple, ledit premier seuil de distance Sd1 est de l'ordre de 200 m, voire de 150 m ou encore 100 m. Le premier seuil de distance Sd1 est défini par le constructeur. Alternativement, le premier seuil de distance Sd1 est défini en fonction d'une préférence du conducteur. Optionnellement, le premier seuil de distance Sd1 peut varier selon la localisation géographique du véhicule 1, par exemple selon que le véhicule ego 1 circule dans une zone urbaine ou péri-urbaine. L'utilisation de la position du véhicule ego 1 permet avantageusement d'utiliser des données fiables de position et d'éliminer la possibilité qu'un nombre important de véhicules secondaires 10 représentatifs d'un embouteillage sont disposés les uns à la suite des autres.

Le procédé comprend, ensuite, la transmission E05 conditionnelle des données préparées, relatives à l'évènement dangereux EDx. La transmission E05 desdites données de la communication préparée est effectuée par le module de communication 5 à au moins l'une des cibles listées précédemment lorsqu'il est détecté que l'évènement dangereux détecté EDx est valide. En revanche, lorsque l'évènement dangereux EDx initialement détecté est invalide, le procédé exécute l'annulation E06 d'une telle transmission afin de ne pas transmettre des informations erronées aux cibles présentes dans l'infrastructure routière.

Alternativement ou additionnellement, la vérification E04 de la validité de l'évènement dangereux EDx détecté comprend directement la détermination E041' de la distance séparant le véhicule ego 1 de l'évènement dangereux EDx, notamment de la partie de l'évènement dangereux EDx la plus proche du véhicule ego 1, et de la distance séparant le véhicule égo 1 de l'au moins un élément d'infrastructure Ix. De telles distances peuvent être déterminées par l'intermédiaire du module de localisation 6, notamment par l'intermédiaire du moyen de localisation 61 ou par l'intermédiaire du moyen de capture d'image 62, tel que décrit précédemment, notamment afin de déterminer une distance par l'intermédiaire de la détection de marquage ou de panneaux de signalisation.

La description précédente s'applique alors *mutatis mutandis,* une fois lesdites distances déterminées, un écart les séparant est calculé puis l'étape de vérification E04 comprend une étape de comparaison E042' de l'écart ainsi calculé avec un seuil d'écart Sd1' prédéfini. L'évènement dangereux EDx détecté est déterminé comme étant invalide lorsque l'écart calculé est inférieur ou égal au seuil d'écart de distance Sd1' prédéfini. Inversement, l'évènement dangereux EDx détecté est considéré comme valide, c'est-à-dire correctement identifié, lorsque ledit écart est strictement supérieur au seuil d'écart Sd1'. Par exemple, ledit seuil d'écart Sd1' est de l'ordre de 200 m, voire de 150 m ou encore 100 m.

L'étape de vérification permet ainsi d'évaluer la proximité du véhicule ego 1, et par extension de véhicules secondaires situés au niveau de l'évènement dangereux EDx, avec au moins un élément de l'infrastructure routière Ix ou plusieurs éléments de l'infrastructure routière Ix pour écarter la détection de faux positifs d'évènements dangereux du type embouteillage. Elle permet ainsi de détecter un élément d'infrastructure routière Ix susceptible de générer un arrêt ou un ralentissement du trafic, tel qu'un giratoire, un panneau stop, un feu tricolore ou autre, qui peut être confondu avec un embouteillage.

Alternativement ou additionnellement encore, l'étape de vérification E04 de la validité de l'évènement dangereux EDx détecté comprend la comparaison de la position de l'évènement dangereux EDx détectée au préalable avec une position d'au moins un élément de l'infrastructure. La description précédente s'applique alors *mutatis mutandis* en utilisant la position de l'évènement dangereux EDx détectée, par exemple la position de la queue d'embouteillage, en lieu de la position du véhicule ego 1. Un deuxième seuil de distance Sd2, strictement inférieur au premier seuil de distance Sd1 est alors appliqué.

De manière optionnelle encore, différentes méthodes de vérification E04 de la validité de l'évènement dangereux EDx sont exécutées parmi celles précitées. Les résultats desdites vérification ayant fonction de confirmation ou validation d'une première méthode de validation.

Optionnellement, la vérification E04 de la validité de l'évènement dangereux EDx est exécutée seulement lorsque le véhicule ego 1 circule à une vitesse longitudinale supérieure ou égale à une vitesse minimale seuil Vs préalablement ou simultanément à la détection de l'évènement dangereux. Par exemple, le seuil minimal de vitesse est supérieur à 50 km/h, par exemple de l'ordre de 80 km/h.

Optionnellement encore, le procédé comprend, en outre, l'émission d'un message d'alerte sonore, visuel et/ou haptique à l'attention du conducteur du véhicule ego 1 lorsque l'évènement distant est validé, c'est à dire lorsqu'il est vérifié et confirmé que le véhicule ego 1 approche d'un embouteillage. Tel qu'exposé plus haut, un tel message d'alerte est communiqué par l'intermédiaire du module d'alerte 7.

En particulier, le message d'alerte est émis lorsque le véhicule ego 1 est situé, dans l'infrastructure routière, à une distance inférieure ou égale à un seuil d'alerte Sa correspondant à une distance définie à parcourir avant d'atteindre la position de l'évènement dangereux EDx. Par exemple, un tel seuil d'alerte Sa est strictement supérieur au premier seuil de distance Sd1. Par exemple, le seuil d'alerte Sa est fixé à 1000 m avant d'atteindre la position de l'évènement dangereux EDx.

L'unité de traitement 4 exécute alors une comparaison d'une distance restante relativement à la position préalablement détectée de l'évènement dangereux EDx, notamment de la queue de l'embouteillage, avec la distance du seuil d'alerte Sa et, lorsque la distance restante présente une valeur inférieure ou égale au seuil d'alerte Sa, elle transmet au module d'alerte 7 des données et/ou un message destiné(es) au conducteur qui les diffuse dans l'habitacle. Un principe similaire peut s'étendre à un temps restant au véhicule ego 1 avant d'atteindre l'évènement dangereux EDx et à un seuil d'alerte Sa fixé en fonction d'une durée restante avant d'atteindre l'évènement dangereux EDx.

De manière optionnelle, le message d'alerte peut être actualisé à intervalle de temps et/ou de distance régulier afin d'informer le conducteur du temps restant et/ou de la distance restante avant d'atteindre l'évènement dangereux EDx.

Ainsi, lorsque le véhicule ego 1 circule dans l'infrastructure routière, le conducteur peut être amené à percevoir des véhicules secondaires 10 à l'arrêt, ou ralentis, qu'il identifie comme étant un embouteillage ou qui peuvent être identifiés, par le système d'aide à la conduite 3 comme étant un embouteillage à tort ou à raison selon le contexte routier. Le conducteur tend alors à exécuter un freinage qui peut déclencher une détection E01 automatisée d'un évènement dangereux EDx du type « embouteillage » par le système de filtrage 2 et/ou le système d'aide à la conduite 3 en fonction des conditions déclenchantes définies pour une telle détection. L'exécution desdites conditions induit, en outre, la préparation E03 d'une communication à l'attention d'au moins une cible connectée, comprenant des données relatives à l'évènement dangereux EDx. Il en résulte que, s'il s'avère que l'évènement dangereux EDx détecté est un simple ralentissement ou arrêt temporaire du trafic dû à un élément d'infrastructure routière, une communication erronée informant d'un embouteillage est transmise aux véhicules secondaires 10 connectés de l'infrastructure routière par le véhicule ego, ce qui peut affecter la sécurité des usagers. Afin de prévenir la transmission d'informations erronées, le véhicule ego 1 selon l'invention exécute l'étape de vérification E04 de la validité de l'évènement dangereux EDx afin de contrôler s'il d'agit d'une situation d'embouteillage ou non. La transmission E05 de la communication préparée relative à l'évènement dangereux est alors conditionnée à la validité de la détection préalablement effectuée.

L'invention propose ainsi un procédé et un système permettant avantageusement d'optimiser les protocoles de communication du véhicule ego avec des cibles connectées en assurant que les données relatives à un évènement dangereux, particulièrement un embouteillage, sont vérifiées et valides avant d'être transmises. L'invention permet ainsi d'augmenter la sécurité des différents véhicules circulant dans l'infrastructure routière en assurant la fiabilité des données communiquées et ce à moindre coût, en utilisant des composants déjà équipés dans le véhicule.

La présente invention ne saurait toutefois se limiter aux moyens et configurations décrits et illustrés ici et elle s'étend également à tout moyen ou configuration équivalents et à toute combinaison techniquement opérante de tels moyens dans la mesure où ils remplissent *in fine* les fonctionnalités décrites et illustrées dans le présent document.

## Revendications

1. Procédé (100) de filtrage de données par un véhicule ego (1) en situation d'évènement dangereux (EDx) du type embouteillage approchant, le procédé (100) comprenant :
- la détection (E01) d'un évènement dangereux (EDx) susceptible d'être un embouteillage, notamment une queue d'embouteillage, et l'acquisition (E02) de données relatives audit évènement comprenant au moins sa position ;
- la préparation (E03) par une unité de traitement (4) d'une communication, comprenant les données acquises, vers au moins une cible sélectionnée parmi un serveur distant, un véhicule secondaire (10) connecté, distinct du véhicule ego (1), et/ou un élément d'infrastructure connecté ;
- la vérification (E04) de la validité de l'évènement dangereux (EDx) détecté afin de contrôler que ledit évènement dangereux est du type embouteillage ou non par l'intermédiaire d'un module de localisation (6) du véhicule ego (1) dans l'infrastructure routière comprenant un moyen de localisation (61) et/ou un moyen de capture d'images (62) ; et
- la transmission (E05), par un module de communication (5), de la communication préparée à l'au moins une cible lorsqu'il est détecté que l'évènement dangereux (EDx) détecté est valide et est un embouteillage ou l'annulation (E06) d'une telle transmission lorsque l'évènement dangereux (EDx) est invalide et n'est pas un embouteillage ;
dans lequel la vérification (E04) de la validité de l'évènement dangereux détecté comprend :
- la comparaison d'une position du véhicule ego (1) avec une position d'au moins un élément de l'infrastructure routière (Ix), l'évènement dangereux (EDx) étant invalide lorsqu'une distance séparant la position de l'évènement dangereux (EDx) de la position de l'au moins un élément d'infrastructure routière (Ix) est inférieure ou égale à un seuil (Sd1) prédéfini ; et/ou
- la détermination d'une distance séparant le véhicule ego (1) de l'évènement dangereux (EDx), la détermination d'une distance séparant le véhicule ego (1) d'au moins un élément de l'infrastructure routière (Ix), la détermination d'un écart entre lesdites distances et la comparaison de l'écart calculé avec un seuil d'écart (Sd1') prédéfini, l'évènement dangereux étant invalide lorsque l'écart calculé est inférieur ou égal au seuil d'écart (Sd1') prédéfini ; et/ou
- la comparaison de la position de l'évènement dangereux (EDx) détectée avec une position d'au moins un élément de l'infrastructure routière, l'évènement dangereux étant invalide lorsqu'une distance séparant la position de l'évènement dangereux (EDx) de l'au moins un élément de l'infrastructure routière est inférieure ou égale à un seuil (Sd2) prédéfini.

2. Procédé (100) de filtrage selon la revendication 1, dans lequel la vérification (E04) de la validité de l'évènement dangereux est exécutée en fonction d'une préférence du conducteur.

3. Procédé (100) de configuration selon la revendication 1 ou 2, dans lequel la vérification (E04) de la validité de l'évènement dangereux est exécutée seulement lorsque le véhicule ego (1) circule à une vitesse longitudinale supérieure ou égale à une vitesse minimale seuil (Vs) préalablement ou simultanément à la détection de l'évènement dangereux.

4. Procédé (100) de filtrage selon l'une des revendications précédentes, dans lequel :
- la détection de l'évènement dangereux comprend la réception, par un serveur distant, un véhicule secondaire (10) connecté et/ou un élément d'infrastructure, de données relatives à l'évènement dangereux (EDx) ; et/ou
- la vérification (E04) de la validité de l'évènement dangereux comprend la réception d'information relatives à une position d'un élément d'infrastructure connecté.

5. Procédé (100) de filtrage selon l'une des revendications précédentes, comprenant, en outre, l'émission d'un message d'alerte sonore, visuel et/ou haptique à l'attention d'un conducteur du véhicule ego (1) communiqué par l'intermédiaire d'un module d'alerte (7) informant ledit conducteur de la validité de l'évènement dangereux.

6. Système de filtrage (2) de données pour un véhicule, le système comprenant des éléments matériels et/ou logiciels mettant en œuvre le procédé (100) selon l'une des revendications précédentes, les éléments matériels comportant au moins une unité de traitement (4) de données, un module de localisation (6) du véhicule dans l'infrastructure routière et un module de communication (5).

7. Véhicule (1) automobile équipé d'un système de filtrage (2) selon la revendication précédente.
